# EUROPÄISCHE PATENTANMELDUNG

(11) **EP 3 824 721 A1**
(43) Veröffentlichungstag der Anmeldung: **26.05.2021**
(21) Anmeldenummer: 20209133.6
(22) Anmeldetag: 23.11.2020
(51) Int. Cl.: A01K 1/015

(54) **ADDITIV FÜR EINSTREU IN DER GEFLÜGELHALTUNG**

(30) Priorität: 25.11.2019 EP 19211177
(71) Anmelder: Grillo-Werke AG, 47169 Duisburg (DE)
(72) Erfinder: Tepper, Daniel, 47169 Duisburg (DE); Biertümpel, Ingo, 47169 Duisburg (DE)
(74) Vertreter: dompatent von Kreisler Selting Werner - Partnerschaft von Patent- und Rechtsanwälten mbB

(57) **Zusammenfassung**

Die vorliegende Erfindung betrifft ein Additiv, welches Natriumhydrogensulfat enthält, zur Verwendung zur Verbesserung des Tierwohls durch Reduktion von Fußballenveränderungen und/oder Sprunggelenksveränderungen in der Geflügelhaltung.

## Beschreibung

Die vorliegende Erfindung betrifft ein Additiv, welches Natriumhydrogensulfat enthält, zur Verwendung zur Verbesserung des Tierwohls durch Reduktion von Fußballenveränderungen und/oder Sprunggelenksveränderungen in der Geflügelhaltung.

Das Thema Tierwohl ist Grundlage einer allgemeinen Diskussion in der Tierzucht. Eine Initiative zu diesem Thema möchte das Tierwohl in der Nutztierhaltung fördern. Eine Gesetzliche Regelung findet sich im Tierschutzgesetz (Deutschland), dessen Ziel es ist, aus der Verantwortung des Menschen für das Tier als Mitgeschöpf dessen Leben und Wohlbefinden zu schützen. Demnach darf niemand einem Tier ohne vernünftigen Grund Schmerzen, Leiden oder Schäden zufügen. Der Tierhalter muss durch die betriebliche Eigenkontrolle die Erfüllung einer tiergerechten Haltung überprüfen und sicherstellen. Dies erfolgt auf Grundlage von Tierschutzindikatoren, das sind neuerdings z.B. Sprunggelenksgesundheit und Fußballengesundheit. Weitere Regelungen finden sich in der Tierschutz-Nutztierhaltungsverordnung (Deutschland) sowie in EU-Richtlinien. Hier werden Mindestanforderungen zum Schutz von landwirtschaftlichen Nutztieren festgelegt.

In der Geflügelhaltung ist beispielsweise vorgeschrieben, dass Masthühner und -puten ständig Zugang zu trockener, lockerer Einstreu haben müssen. Dies soll die Ausübung arttypischer Verhaltensweisen wie Picken, Scharren und Staubbaden sicherstellen.

Durch die Ausscheidung der Tiere kommt es jedoch dazu, dass die Einstreu feucht wird. Dies hat zum einen einen negativen Einfluss auf die Fußballengesundheit der Tiere. Zum anderen wird die Schadgasbildung im Stall befördert.

Die Schadgasbildung in Form von Ammoniak stellt nicht nur ein olfaktorisches Problem dar, sondern kann zu Schleimhautreizungen am Tier führen. Die Fußballengesundheit ist nicht nur aus Sicht des Tierwohls ein relevanter Faktor, sondern auch aus wirtschaftlichen Gründen. So wird das Tierwohl auch anhand der Fußballenveränderungen bewertet. Ist die Häufigkeit und der Schweregrad der Fußballenveränderungen wiederholt zu hoch, so muss die Besatzdichte reduziert werden, um das Tierwohl zu verbessern. Dies ist nicht nur in der konventionellen Zucht, sondern auch in der Bio-Zucht der Fall.

Um eine trockene Einstreu zu ermöglichen, werden unterschiedliche Materialien als Einstreu verwendet. Hierbei handelt es sich beispielsweise um Stroh oder Häckselstroh, Weichholzspäne, Strohpellets, Strohgranulat, Lignocellulose und/oder Maissilage. Üblicherweise werden die unterschiedlichen Materialien nicht gleichzeitig miteinander verwendet, sondern es wird lediglich ein Material als Einstreu ausgewählt. Dennoch wäre es auch möglich, unterschiedliche Einstreuarten miteinander zu vermischen und so gleichzeitig zu verwenden.

Als Parameter für die Einstreuqualität hat sich der Trockensubstanzgehalt herausgebildet. Bei der Einstallung liegt dieser üblicherweise bei 90% oder mehr. Bei Ende eines Masthühnerdurchgangs nach 35-42 Masttagen schwankt der Trockensubstanzgehalt zwischen etwa 40 und 75%. Die Untersuchung unterschiedlicher Einstreumaterialien hat gezeigt, dass lediglich ein regelmäßiger Austausch zu einem langfristigen ausreichend hohen Trockensubstanzgehalt führt. Keines der bekannten Einstreu ist für sich alleine verwendet ausreichend, um über die gesamte Mastzeit des Geflügels Fußballenveränderungen zu verhindern.

Die Aufgabe der vorliegenden Erfindung besteht somit in der Verbesserung des Tierwohls in der Geflügelhaltung. Insbesondere geht es um die Verbesserung des Tierwohls dahingehend, dass Fußballenveränderungen und/oder Sprunggelenksveränderungen reduziert werden.

In einer ersten Ausführungsform wird die erfindungsgemäße Aufgabenstellung gelöst durch ein Additiv, welches Natriumhydrogensulfat enthält, zur Verwendung zur Verbesserung des Tierwohls in der Geflügelhaltung, insbesondere in der Haltung von Hühnern und Puten, durch Prävention oder Reduktion von Fußballenveränderungen und/oder Sprunggelenksveränderungen, dadurch gekennzeichnet, dass man zusätzlich zur Einstreu das Additiv einbringt, wobei die Menge an Additiv 100 g/m² Stallfläche oder mehr beträgt

Es hat sich gezeigt, dass bei gleich abnehmendem Trockensubstanzgehalt im Laufe der Haltungsperiode durch Zusatz eines Additivs zur Einstreu der pH-Wert des Einstreukomplexes deutlich reduziert werden kann. Erfindungsgemäß weist dieses Additiv Natriumhydrogensulfat auf. Dabei hat sich gezeigt, dass eine Menge von Additiv von 100 g/m² Stallfläche gerade ausreichend ist, um eine Verbesserung des Tierwohls zu ermöglichen. Die Menge an Additiv beträgt somit 100 g/m² Stallfläche oder mehr.

Die notwendige Menge an Additiv ist dabei abhängig von der Zahl der Tiere pro Quadratmeter Stallfläche. Das erfindungsgemäße Additiv bezieht sich vorliegend auf Mastbetriebe, also die Mastgeflügelhaltung. Geflügel im Sinne der vorliegenden Erfindung sind insbesondere Puten und Hühnervögel. Bei anderen Geflügelarten treten auf Grund der anderen anatomischen Fußformation diese Probleme eher selten auf.

Überraschenderweise hat sich gezeigt, dass durch die Zugabe von Natriumhydrogensulfat zusammen mit der Einstreu die Fußballengesundheit verbessert werden kann. Die Zahl von Veränderungen am Fußballen konnte deutlich reduziert werden. Es wird vermutet, dass dies mit dem Bakterienwachstum in der Einstreu sowie der zeitlichen Ausbildung des Immunsystems des Geflügels zusammenhängt.

Verletzungen am Fußballen lassen sich in der Geflügelhaltung nicht vollständig verhindern. Problematisch sind Zellveränderungen im Bereich dieser Verletzungen sowie Keime, die in diese Wunden oder Verletzungen eindringen. Hierdurch können Fußballenveränderungen entstehen. Es hat sich nun gezeigt, dass durch das erfindungsgemäße Additiv das bakterielle Wachstum in der Einstreu verlangsamt wird, vorzugsweise auch die Zahl der Bakterien abgesenkt werden kann. Dies ist insbesondere in den ersten Tagen nach der Einstallung der Fall.

Es hat sich gezeigt, dass insbesondere ein Zeitraum von etwa einer Woche bis hin zu zwei Wochen relevant ist. Es wird vermutet, dass dies mit der Ausbildung des Immunsystems der Hühner und Puten zusammenhängt. In den ersten 10 bis 14 Lebenstagen bildet sich bei Geflügel das Immunsystem aus. Kommt es davor zu Verletzungen, kann der Körper beim Eindringen von Erregern nicht adäquat reagieren. Es ist daher von besonderem Interesse in diesem Zeitraum die Menge an Erregern in der Einstreu möglichst gering zu halten. Überraschenderweise hat sich gezeigt, dass dies mit dem erfindungsgemäßen Additiv in der gewünschten Menge möglich ist.

Insbesondere geeignet sind Mengen an Additiv im Bereich von 150 g/m² bis 1000 g/m². Insbesondere bevorzugt werden wenigstens 200 g/m², vorzugsweise 250 g/m², insbesondere 300 g/m² Additiv zugegeben. Die Menge an Additiv beträgt vorzugsweise 700 g/m² oder weniger, vorzugsweise 600 g/m² oder weniger, insbesondere 550 g/m² oder weniger, besonders 500 g/m² oder weniger vorzugsweise 400 g/m² oder weniger. Es hat sich gezeigt, dass ein Anteil von 150 g/m² Stallfläche an Additiv ausreichend ist, um Fußballenveränderungen in der Mastgeflügelhaltung zu reduzieren.

Die maximale Menge an Einstreu ist vom Haltungsverfahren und den technischen sowie baulichen Gegebenheiten abhängig. Bei einer guten Bodenisolierung und guten Klimasteuerung kann eine geringere Menge an Einstreu genutzt werden. Die vorliegende Erfindung bezieht sich auf gesetzlich zugelassene Stallbauten mit Besatzdichten in der Masthühnerhaltung gemäß § 19 TierSchNutzV (Deutschland) sowie den Bundeseinheitlichen Eckwerten zur Haltung von Mastputen (2013).

Bei einer einmaligen Zugabe an Additiv zu Beginn der Einstallung hat ein Anteil von 500 g/m² zu besonders guten Ergebnissen geführt. Höhere Anteile sorgen nicht für eine signifikante Verbesserung, sind jedoch wirtschaftlich nachteilig, da durch die Menge an Additiv selbstverständlich höhere Kosten entstehen. Somit ist es aus wirtschaftlicher Sicht von Interesse, die Menge an Additiv möglichst gering zu halten. Entsprechend ist eine Obergrenze von 450 g/m² oder weniger insbesondere von 400 g/m² oder weniger besonders bevorzugt.

Das erfindungsgemäße Additiv weist als Hauptbestandteil Natriumhydrogensulfat auf. Vorzugsweise ist es Natriumhydrogensulfat. Dieses liegt in Futtermittelqualität vor, damit sich keinerlei Nachteile in der Geflügelhaltung und -vermarktung ergeben. Sollte das Natriumhydrogensulfat weitere Bestandteile aufweisen, so unterliegen auch diese vorzugsweise den Bestimmungen an Futtermittel.

Natriumhydrogensulfat als Additiv hat gegenüber anderen hygroskopischen Einstreuadditiven die Wirkung, dass es den pH-Wert in der Einstreu reduziert. Dabei sollte der pH-Wert des Einstreus während der Mastdauer 5 oder weniger, insbesondere 4 oder weniger, vorzugsweise 3 oder weniger betragen. Diese pH-Werte werden insbesondere über einen Zeitraum von wenigstens 6 Tagen mit Hilfe des erfindungsgemäßen Additiv erreicht, ohne dass es einer Nachdosierung des Additivs bedarf. Mit den erfindungsgemäßen Mindestmengen an Additiv ist es möglich, den pH-Wert bis zu einem Zeitraum von einer Woche bis zu 10 Tagen unter einem pH-Wert von 6, insbesondere von 5, vorzugsweise von 4, zu halten. Durch diesen niedrigen pH-Wert wird das Bakterienwachstum gehemmt. Hierdurch ist die Zahl der Erreger, welche Verletzungen infizieren können, im Stall gering. Dies fördert das Tierwohl und reduziert insbesondere die Entstehung von Fußballenveränderungen sowie von Sprunggelenksveränderungen. Vorzugsweise wird der pH-Wert über den gesamten Mastzeitraum von 42 Tagen derart abgesenkt, dass das Bakterienwachstum signifikant gehemmt werden kann.

Die Reduktion des pH-Wertes sorgt für eine Reduktion der Reizung und Entzündung der Fußballenhaut. Ein erhöhter pH-Wert, wie er bei rein hygroskopischen Additiven vorkommt, oder bei der Verwendung von Einstreu ohne ein Additiv, befördert die Ammoniumfreisetzung, da sich Bakterien, die aus den Ausscheidungen des Geflügels Ammonium freisetzen, rasch vermehren. Dies wiederum führt erneut zu einer Reizung und Entzündung der Fußballenhaut, so dass verstärkt Fußballenveränderungen auftreten. Diese können durch das erfindungsgemäße Additiv verringert werden.

Erfindungsgemäß ist die Menge an Additiv, wie beschrieben, zu Beginn der Geflügelaufzucht bzw. -mast einzubringen. Dies kann gleichzeitig mit dem Einstreu erfolgen. Es ist auch möglich, das Additiv vor dem Einstreu einzubringen oder dieses nach dem Einstreu nachträglich in den Stall einzubringen.

Bei einer einmaligen Zugabe des Additivs, welche insbesondere nach dem Einbringen der Einstreu erfolgt, ist es, wie beschrieben, möglich, den pH-Wert der Einstreu über einen gewissen Zeitraum abzusenken. Es ist bevorzugt, dass der pH-Wert über einen Zeitraum von bis zu 42 Tagen, also über den gesamten Zeitraum der Mast, unterhalb von 6 vorzugsweise unterhalb von 5, insbesondere unterhalb von 4,5, bevorzugt unterhalb von 4 gehalten werden kann. -Wird nun über den gesamten Mastzeitraum der pH-Wert abgesenkt, kann die Zahl der Fußballenveränderungen deutlich reduziert oder sogar ganz verhindert werden, da diese nur noch vereinzelt an Tieren auftreten. Insbesondere wird während der Mast ein pH-Wert von 4,5 nicht überschritten.

Daher ist es erfindungsgemäß auch möglich, dass das Additiv nicht nur einmalig zu Beginn der Einstallung eingebracht wird. Es ist erfindungsgemäß auch möglich, dass während der Mastzeit erneut Additiv eingebracht wird. Die Gesamtmenge an Additiv, die über die gesamte Mastzeit eingebracht wird, ist dabei 1000 g/m² oder weniger, insbesondere 800 g/m² oder weniger, vorzugsweise 600 g/m² oder weniger.

Natriumhydrogensulfat liegt üblicherweise in Form eines Pulvers vor. Es ist erfindungsgemäß auch möglich und bevorzugt, das Additiv in Form von Partikeln oder als Granulat einzusetzen. Die Begriffe Partikel und Granulat werden im Folgenden synonym verwendet. Insbesondere weisen diese Partikel einen mittleren Durchmesser von 0,5 mm oder mehr, vorzugsweise von 1 mm oder mehr, insbesondere von 2 mm oder mehr, besonders bevorzugt von 3 mm oder mehr auf. Eine maximale Größe sollte 15 mm nicht überschreiten, vorzugsweise sind die Partikel kleiner als 12 mm, insbesondere kleiner als 10 mm, vorzugsweise kleiner als 8 mm. Insbesondere bevorzugt liegt die Größe der Partikel im Bereich von 2 bis 5 mm, insbesondere von 3 mm bis 4 mm. Die Partikel sollten klein genug sein, um vom Geflügel nicht als störend wahrgenommen zu werden. Durch die partikuläre Ausgestaltung kommt es jedoch zu einer verzögerten Freisetzung des Natriumhydrogensulfats, so dass der pH-Wert der Einstreu über einen längeren Zeitraum hinweg abgesenkt bleibt.

Partikel sind erfindungsgemäß vorzugsweise sphärische Partikel. Die Größe entspricht dabei dem Durchmesser. Sollten die Partikel keine perfekte sphärische Form aufweisen, so ist hierunter der größte Durchmesser zu verstehen.

In einer besonders bevorzugten Ausführungsform ist das Additiv mit einer Beschichtung versehen. Hierdurch wird die verzögerte Freisetzung nochmals intensiviert. Dies ermöglicht eine einmalige Einbringung des Additivs mit der Wirkung einer längeren pH-Wert Absenkung verglichen mit der Zugabe des Additivs als Pulver. Dabei kann erfindungsgemäß das eingebrachte Additiv vollständig mit einer Beschichtung versehen sein. In einer besonders bevorzugten Ausführungsform ist nur ein Teil des eingebrachten Additivs mit einer Beschichtung versehen. Dabei ist die Beschichtung so gewählt, dass sich diese im Laufe der Masthaltung auflöst. Somit ist eine verzögerte Freisetzung des Natriumhydrogensulfats als Wirkstoff des Additivs ermöglicht. Eine Beschichtung muss erneut den Anforderungen an ein Tierfutter gerecht werden, damit es nicht zu einer Schädigung des Geflügels kommt. Geeignete wasserlösliche Beschichtungen sind beispielsweise auf Zucker- oder Cellulosebasis.

Die Einstreu kann erfindungsgemäß aus üblichen Einstreuarten ausgewählt sein, wie beispielsweise Stroh, Pellets, Granulaten, Weichholzspäne und/oder Maissilage. Pellets können aus unterschiedlichen Getreidearten gefertigt sein, wie beispielsweise Weizen-, Triticale, Hafer oder Dinkelpellets.

Das erfindungsgemäße Additiv wird zur Reduktion von Fußballenveränderung und/oder Sprunggelenksveränderung verwendet. Das Additiv dient hier zur Vorbeugung. Durch die Verwendung des Additivs entstehen die Fußballenveränderungen und/oder Sprunggelenksveränderungen gar nicht erst oder nur bei einer geringeren Anzahl an Masttieren. Somit kann durch das erfindungsgemäße Additiv die Entstehung von Fußballenveränderungen und/oder Sprunggelenksveränderungen bei Masttieren ganz oder zumindest teilweise vermieden werden. Treten die Fußballenveränderungen und/oder Sprunggelenksveränderungen auf, so sind sie weniger stark ausgeprägt als ohne das erfindungsgemäße Additiv.

Insbesondere wird durch die Verwendung des erfindungsgemäßen Additivs das Bakterienwachstum im Einstreu gehemmt und/oder der pH-Wert abgesenkt.

Durch die Zugabe des Additivs kommt es erfindungsgemäß zu einer Absenkung des pH-Wertes in der Einstreu. Hierdurch wird das Bakterienwachstum gehemmt, was zu einer Verbesserung der Fußballengesundheit und auch zur Reduktion an Sprunggelenkserkrankungen führt. Das erfindungsgemäße Additiv ist besonders bevorzugt, da es nicht nur den pH-Wert absenkt, sondern auch den AW-Wert (Activity of Water-Wert) beeinflusst. Der AW-Wert gibt an, in welchem Maße Wasser durch ein Substrat, im vorliegen Fall das Kot-Einstreu-Gemisch mit Natriumhydrogensulfat, gebunden ist. Die Zugabe eines hygroskopischen Materials wie Natriumbisulfat erhöht den Anteil an gebundenem Wasser. Dadurch verringert sich der Anteil an freiem Wasser, das für zahlreiche mikrobielle Prozesse erforderlich ist. Bei einem AW-Wert kleiner 0,85 wird mikrobielles Wachstum, bspw. von E.coli, und somit auch die Enzymaktivität zur Umwandlung von Ausscheidungsprodukten in bspw. gasförmigen Ammoniak deutlich reduziert.

Die Reduktion des Bakterienwachstums hat zudem den Einfluss, dass die Menge an Ammoniak, die durch die Bakterien gebildet wird, reduziert wird. Dies hat einerseits auch wieder Auswirkungen auf die Fußballengesundheit. Zum anderen sorgt dies für eine Energieeinsparung. Die TierSchNutzV (Deutschland) regelt in § 18 die maximale Konzentration an Ammoniak in der Luft. Da sich Ammoniak beständig bildet, muss eine gute Durchlüftung der Ställe sichergestellt werden. Gleichzeitig muss im Stall eine bestimmte Temperatur herrschen, so dass der Stall beheizt werden muss. Je mehr gelüftet werden muss, um die Menge an Ammoniak zu reduzieren, desto mehr Wärmeleistung wird benötigt, um die Temperatur im Stall zu in einem bestimmten Bereich zu halten.

Die TierSchNutzV (Deutschland) definiert auch die Menge an CO₂ in der Luft. Zudem entstehen durch die Bakterien auch Methan. Durch die erfindungsgemäße Anwendung kann der Ausstoß an klimawirksamen Gasen, wie CO₂ oder Methan signifikant reduziert werden.

Die Fußballengesundheit kann beispielsweise nach dem Boniturschlüssel für die Bewertung der Fußballengesundheit nach Hocking et al (Hocking, P.M., Mayne, R.K., Else, R.W., French, N.A. and Gatcliffe, J. (2008): Standard European footpad dermatitis scoring system for use in turkey processing plants. World's Poultry Sci. J. 64:323-328) erfolgen. Dieser umfasst die Noten 0 bis 5. Bei 0 sind keine äußeren Anzeichen für Fußballendermatitis (FPD) zu erkennen. Die Haut der Fußballen ist weich und es sind keine Schwellungen, Hyperkeratose (Verdickung der Hornschicht), Epithelläsionen oder Nekrosen erkennbar. Die Note 1 bedeutet, dass sich der Fußballen härter anfühlt, als bei einem gesunden Fuß. Das Zentrum des Fußballens ist aufgewölbt, die retikulären Hautschuppen beginnen sich auszudifferenzieren und zu separieren. Oberflächliche Epithelläsionen und vereinzelte kleine schwarze nekrotische Bereiche können vorhanden sein. Vermehrte Hornbildung (proliferative Hyperkeratose) ist erkennbar.

Note 2 definiert sich durch eine deutliche Schwellung des Fußballens. Die retikulären Hautschuppen sind stark ausdifferenziert. Starke Hornbildung (Hyperkeratose) und deutliche Epithelläsionen sind erkennbar. Schuppenartige nekrotischen Bereiche deutlich herausgebildet, umgeben von weiß verfärbten Hautschuppen. Der nekrotische Bereich macht weniger als ¼ der Fläche des Fußballens aus.

Bei Note 3 ist die Schwellung klar erkennbar und der gesamte Fußballen ist vergrößert. Die retikulären Hautschuppen sind stark ausdifferenziert, deutliche Epithelläsionen und Hyperkeratosen sind erkennbar. Der nekrotische Bereich ist stark herausgebildet und macht bis zu ½ der Fläche des Fußballens aus.

Bei Note 4 ist gegenüber Note 3 die Fläche des Fußballens, der mit nekrotischen Zellen bedeckt ist, größer, beträgt also mehr als die Hälfte.

Es hat sich gezeigt, dass mit dem erfindungsgemäßen Additiv, die Zahl der Tiere in der Mast, deren Fußballen mit den Werten 3 oder 4 bewertet werden, deutlich reduziert werden konnte. Dabei hat das erfindungsgemäße Additiv keinen nachteiligen Einfluss auf die Mortalität oder das Mastgewicht der Tiere. Insbesondere liegt die Mortalität der Tiere unterhalb der in der Literatur beschriebenen durchschnittliche Mortalität für Deutschland in der Geflügelzucht, nämlich unterhalb 4,9% und vorzugsweise unterhalb 3,6%, wie im Sammelwerk Zentralverband der Deutschen Geflügelwirtschaft e. V. (Hrsg.) (Marktinfo, 2019): Geflügeljahrbuch 2020, Stuttgart: Eugen Ulmer Verlag, 2019, im Kapitel Damme, Klaus (Markt, 2019): Faustzahlen zur Betriebswirtschaft, in: Zentralverband der Deutschen Geflügelwirtschaft e. V. (Hrsg.), Geflügeljahrbuch 2020, 2019, S. 52-71 beschrieben.

Vorzugsweise beträgt der Anteil der Tiere, die eine Fußballen Bewertung von 0, 1 oder 2 aufweisen, nach 8 Lebenstagen 90% oder mehr, insbesondere 100%; nach 36 Tagen 75% oder mehr, insbesondere 80% oder mehr.

Insbesondere ist es möglich, dass der Anteil der Tiere, die eine Fußballen Bewertung von 3 oder 4 aufweisen, deutlich reduziert wird. Insbesondere liegt der Anteil an Tieren mit einer Fußballenbewertung zum Ende der Mastdauer von 3 oder 4 unterhalb von 25%, insbesondere unterhalb von 20%.

### Ausführungsbeispiel

Im nachfolgenden Ausführungsbeispiel wird die vorliegende Erfindung in nicht limitierender Weise weiter erläutert.

In zwei nebeneinanderstehenden Ställen mit einer Fläche von jeweils 1600 m² wurden jeweils parallel eine Gruppe Geflügel unter Verwendung des erfindungsgemäßen Additivs (Versuchsgruppe) und ohne Verwendung des Additiv (Kontrollgruppe) in zwei Durchgängen über eine Dauer von jeweils 36 Tagen unter ansonsten gleichen Bedingungen gemästet. Zur Berücksichtigung von Umwelteinflüssen erfolgte nach dem ersten Durchgang ein Stalltausch für Versuchsgruppe und Kontrollgruppe. Im ersten Durchgang wurden in der Versuchsgruppe und Kontrollgruppe jeweils 32.800 Tiere eingestallt, im zweiten Durchgang jeweils 30.900.

Als erfindungsgemäßes Additiv wurde Natriumhydrogensulfat eingesetzt.

Für jeden der Durchgänge wurden ausschließlich Eintagsküken der Genetik ROSS 308 eingestallt. Ein Gemisch aus Dinkelspelzengranulat und Dinkelpellets wurde für jeden Durchgang in einer Menge von 700 g/m² Stallfläche gleichmäßig verteilt. Darüber wurde für die Versuchsgruppe das erfindungsgemäße Additiv in einer Menge von 250 g/m² mittels Rasensaatmaschine oberflächlich ausgebracht. Das Additiv wurde nicht eingearbeitet. Das Additiv wurde einmalig bis 20 Stunden vor Einstallung der Eintagsküken auf das Einstreumaterial aufgebracht. Im Zuge der Stallvorbereitung wurde der Stall auf ca. 34 Grad Celsius vorgeheizt.

Während der Mastdauer wurde alle 7 Tage ab Einstallungstermin (1. LT; LT=Lebenstag) bis 29. LT von 120 Tieren pro Gruppe das Einzeltiergewicht erfasst. Es wurden an den entsprechenden Lebenstagen jeweils 120 Tiere aus jeder Gruppe (Versuchsgruppe und Kontrollgruppe) nach Hocking et al (2008) (siehe oben) bonitiert. In die Auswertung ging der Wert des am stärksten veränderten Ballens bzw. Gelenks eines Paares ein.

**Tabelle 1: Lebendgewicht im Bestand (in g; n=120 Tiere/Gruppe und Termin); Mittelwert (Standardabweichung)**

| Lebenstag | 1 | 8 | 15 | 22 | 29 |
|---|---|---|---|---|---|
| Versuchsgruppe | 46,3 (3,9) | 206,4 (21,5) | 515,3 (50,8) | 1077,7 (106,8) | 1647,6 (215,5) |
| Kontrollgruppe | 47,1 (4,3) | 206,3 (22,2) | 507,3 (57,7) | 1047,5 (110,7) | 1616,0 (179,7) |

**Tabelle 2: Manuelle Fußballenbewertung (in %, jeweils 120 Tiere/Gruppe)**

| LT (Score) | Versuchsgruppe | | | Kontrollgruppe | | |
|---|---|---|---|---|---|---|
| | 0 | 1+2 | 3+4 | 0 | 1+2 | 3+4 |
| 1 | 100,00 | 0,00 | 0,00 | 100,00 | 0,00 | 0,00 |
| 8 | 85,00 | 15,00 | 0,00 | 78,33 | 21,67 | 0,00 |
| 15 | 89,17 | 10,83 | 0,00 | 90,83 | 9,17 | 0,00 |
| 22 | 89,17 | 10,00 | 0,83 | 83,33 | 16,67 | 0,00 |
| 29 | 86,67 | 13,33 | 0,00 | 77,5 | 21,67 | 0,83 |

**Tabelle 3: Bewertung der Fersenhöcker (in %, jeweils 120 Tiere/Gruppe)**

| LT (Score) | Versuchsgruppe | | | Kontrollgruppe | | |
|---|---|---|---|---|---|---|
| | 0 | 1+2 | 3+4 | 0 | 1+2 | 3+4 |
| 1 | 95,00 | 5,00 | 0,00 | 95,83 | 4,17 | 0,00 |
| 8 | 99,17 | 0,83 | 0,00 | 94,17 | 5,83 | 0,00 |
| 15 | 81,67 | 18,33 | 0,00 | 65,83 | 34,17 | 0,00 |
| 22 | 49,17 | 50,83 | 0,00 | 45,00 | 53,33 | 1,67 |
| 29 | 45,83 | 54,17 | 0,00 | 29,17 | 70,00 | 0,83 |

Es zeigt sich, dass die Verwendung des erfindungsgemäßen Additivs keine signifikanten Auswirkungen auf die Lebendgewichte während der Mastdauer hatte.

Die Fußballen- und Fersenhöckerveränderungen konnten demgegenüber durch den Einsatz des Additivs signifikant verbessert werden.

## Patentansprüche

1. Additiv, welches Natriumhydrogensulfat enthält, zur Verwendung zur Verbesserung des Tierwohls in der Geflügelhaltung, insbesondere in der Haltung von Hühnern und Puten, durch Prävention oder Reduktion von Fußballenveränderungen und/oder Sprunggelenksveränderungen, **dadurch gekennzeichnet, dass** man zusätzlich zur Einstreu das Additiv einbringt, wobei die Menge an Additiv 100 g/m² Stallfläche oder mehr beträgt.

2. Additiv nach Anspruch 1, **dadurch gekennzeichnet, dass** die Menge an Additiv 150 g/m² bis 1000 g/m², insbesondere 200 g/m² bis 600 g/m² beträgt.

3. Additiv nach Anspruch 1 oder 2, **dadurch gekennzeichnet, dass** das Additiv Natriumhydrogensulfat ist.

4. Additiv nach einem der Ansprüche 1 bis 3, **dadurch gekennzeichnet, dass** es der Reduktion des pH-Wertes in der Einstreu und/oder der Hemmung des Bakterienwachstums in der Einstreu dient.

5. Additiv nach Anspruch 4, **dadurch gekennzeichnet, dass** durch das Additiv der pH-Wert der Einstreu 5 oder weniger, insbesondere 4,5 oder weniger, vorzugsweise 4 oder weniger, über einen Zeitraum von wenigstens 6 Tagen, insbesondere über einen Zeitraum von 10 Tagen bis 14 Tagen, vorzugsweise über die gesamte Mastzeit, beträgt.

6. Additiv nach einem der Ansprüche 1 bis 5, **dadurch gekennzeichnet, dass** das Additiv in Form von Partikeln (Granulat) vorliegt.

7. Additiv nach Anspruch 6, **dadurch gekennzeichnet, dass** die Partikel sphärische Partikel sind mit einem Durchmesser von 1 mm oder mehr, insbesondere von 2 mm bis 10 mm.

8. Additiv nach einem der Ansprüche 1 bis 7, **dadurch gekennzeichnet, dass** die Einstreu ausgewählt ist aus Stroh, Pellets, Granulaten, Weichholzspäne und/oder Maissilage
